# EUROPEAN PATENT APPLICATION

(11) **EP 2 608 502 A2**
(43) Date of publication of application: **26.06.2013**
(21) Application number: 12197221.0
(22) Date of filing: 14.12.2012
(51) Int. Cl.: H04M 1/725

(54) **Context activity tracking for recommending activities through mobile electronic terminals**

(30) Priority: 19.12.2011 US 201113329681
(71) Applicant: Telefonaktiebolaget L M Ericsson (Publ), 164 83 Stockholm (SE)
(72) Inventor: Xing, Bo, Fremont, CA California 94555 (US); Svensson, Martin, 12629 Hägersten (SE); Moritz, Simon, 11236 Stockholm (SE)
(74) Representative: HOFFMANN EITLE

(57) **Abstract**

A mobile electronic terminal includes a context-activity tracking module, a recommendation module, and a user interface. The context-activity tracking module detects defined contexts, identifies associations between occurrence of the contexts and activities performed by a user of the mobile electronic terminal, and records information in a context-activity repository identifying the associations. The recommendation module identifies a present occurrence of a context that is associated with a previous performance of at least one activity identified by the information in the context-activity repository, and generates a recommendation for the at least one activity that can be performed by the user. The user interface communicates the recommendation for the at least one activity to the user, and to receive an activation response from the user. Related context activity repository nodes and methods by a mobile electronic terminal are disclosed.

## Description

### TECHNICAL FIELD

The present invention relates to communication systems and, more particularly, to mobile electronic terminals and network nodes that recommend activities to users.

### BACKGROUND

Mobile communication terminals are increasingly being used for non-communication functionality, including for electronic personal assistant functionality (e.g., schedule/task management) and entertainment functionality.

With the increasing amounts of non-volatile memory in electronic terminals and availability of downloadable applications, media content, etc., from networked servers, users can have an enormous number of choices of functionality to scan through to identify a function that a user desires to perform. Some terminal functionality, such as personal assistant functionality can be scheduled to generate electronic reminders to a user at a defined date and time. However, most terminal functionality passively awaits activation by a user, which can place an undesirable burden on users to remember available functions and/or sequentially scroll-through available functionality.

Some electronic terminals are capable of sorting applications, contacts, and media content for presentation to a user. For example, some mobile communication terminals provide a sorted list of the most talked-to contacts in their phonebooks, and some terminals display installed applications in a list that is ordered based on their usage (i.e., arranged highest to lowest frequency of use). Although these features make it much easier for users to locate an application, contact, media content, and other activities, the user is not further relieved of the burden of identifying a desired type of activity (e.g., gaming application, streaming video of sporting event/news/television show, initiating or responding to email/text messages, etc.) in view of a potentially large number of available activities.

The approaches and presently recognized problems described above in this section could be pursued, but are not necessarily approaches and/or problems that have been previously conceived or pursued. Therefore, unless otherwise clearly indicated herein, the approaches and problems described above in this section are not prior art to claims in any application claiming priority from this application and are not admitted to be prior art by inclusion in this section.

### SUMMARY

One embodiment of the present invention is directed to a mobile electronic terminal that includes a context-activity tracking module, a recommendation module, and a user interface. The context-activity tracking module detects defined contexts, identifies associations between occurrence of the contexts and activities performed by a user of the mobile electronic terminal, and records information in a context-activity repository identifying the associations. The recommendation module identifies a present occurrence of a context that is associated with a previous performance of at least one activity identified by the information in the context-activity repository, and generates a recommendation for the at least one activity that can be performed by the user. The user interface communicates the recommendation for the at least one activity to the user, and to receive an activation response from the user.

In this manner, the mobile electronic terminal may dynamically and automatically recommend a list of activities that the user may want to perform using the mobile electronic terminal, another mobile electronic terminal, and/or separate from any mobile electronic terminal. Because the activity recommendations can be determined responsive to a presently detected context, the recommendations can be highly personalized to a particular user's habits and can dynamically change to reflect changes that occur over time. This context-aware recommendation of activities may remind the user of routine activities that have not been purposefully scheduled by the user for generation of the reminder, may assist the user with exploring new activities that can be performed, and/or may improve the user's enjoyment provided by the mobile electronic terminal.

Another embodiment is directed to a context activity repository node that includes a network interface, a memory, and a processor circuit. The network interface is configured to communicate through a network with a plurality of mobile electronic terminals. The memory includes a context-activity repository. The processor circuit is configured to receive information from the mobile electronic terminals that identifies associations between occurrence of defined contexts and activities performed by users of the mobile electronic terminals, to store the information in the context-activity repository, to respond to a query from a mobile electronic terminal that identifies a present occurrence of a context by determining an association to a previous performance of at least one activity identified by the information in the context-activity repository, and to communicate an identification of the previously performed at least one activity to the mobile electronic terminal.

Another embodiment is directed to a method performed by a mobile electronic terminal. Occurrence of defined contexts are detected. Associations are identified between occurrence of the contexts and performance of activities by a user of the mobile electronic terminal. Information is recorded in a context-activity repository that identifies the associations. A present occurrence of a context, that is associated with a previous performance of an activity identified by the information in the context-activity repository, is identified. A recommendation is generated for the at least one activity that can be performed by the user.

Other mobile electronic terminals, context activity repository nodes, and methods according to embodiments of the invention will be or become apparent to one with skill in the art upon review of the following drawings and detailed description. It is intended that all such additional methods and network nodes be included within this description, be within the scope of the present invention, and be protected by the accompanying claims. Moreover, it is intended that all embodiments disclosed herein can be implemented separately or combined in any way and/or combination.

### BRIEF DESCRIPTION OF THE DRAWINGS

The accompanying drawings, which are included to provide a further understanding of the disclosure and are incorporated in and constitute a part of this application, illustrate certain non-limiting embodiment(s) of the invention. In the drawings:

Figure 1 is a block diagram of an exemplary mobile electronic terminal that performs context-activity tracking for use in recommending activities to a user in accordance with some embodiments of the present invention;

Figure 2 is a further block diagram of the mobile electronic terminal of Figure 1 configured in accordance with some embodiments of the present invention;

Figure 3 is a block diagram of components of a communication system that allow the mobile electronic terminal of Figure 1 to access remotely located context-activity information through a network;

Figure 4 illustrates a display device of the mobile electronic terminal of Figure 1 that displays a list of recommended activities to a user;

Figures 5-9 are flowcharts of operations and methods that may be performed by various components of the mobile electronic terminal of Figure 1 in accordance with some embodiments of the present invention; and

Figure 10 is a block diagram of an exemplary network node that can store information for use in recommending activities to a user in accordance with some embodiments of the present invention.

### DETAILED DESCRIPTION

In the following detailed description, numerous specific details are set forth in order to provide a thorough understanding of the invention. However, it will be understood by those skilled in the art that the present invention may be practiced without these specific details. In other instances, well-known methods, procedures, components and circuits have not been described in detail so as not to obscure the present invention.

The following example embodiments provide a number of advantages and benefits relative to existing mobile electronic devices and methods for recommending applications to a user. It will be appreciated by those skilled in the art in view of the present description, however, that the invention is not limited to these embodiments which produce any or all of these advantages or benefits and that other advantages and benefits may be realized depending upon the particular implementation.

Some embodiments are directed to a mobile electronic terminal that identifies associations between various activities that a user of a mobile electronic terminal performs and various contexts that are occurring proximately in time thereto. These associates may identify a user's habits for which activities are always, typically, or sometimes performed by a user when certain contexts exist. For example, the mobile electronic terminal may determine that a user typically calls her parents on Friday night, listens to certain types of music while commuting to work, listens/reads/watches news while commuting home, plays certain types of games when waiting at certain locations (e.g., dentist/doctor office), and has other such habits. The mobile electronic terminal identifies a present occurrence of a context that is associated with when at least one activity was previously performed, and generates a recommendation for the at least one activity that can be performed by the user.

As used herein, a "mobile electronic terminal" or "terminal" includes data processing circuitry configured to provide functionality for operation by a user, and may include wireless communication capability, such as that provided by a mobile telephone ("cellular" telephone), a data communication terminal, a portable computer, a pocket computer, hand-held computer, a laptop computer, an electronic book reader, and/or a video game console.

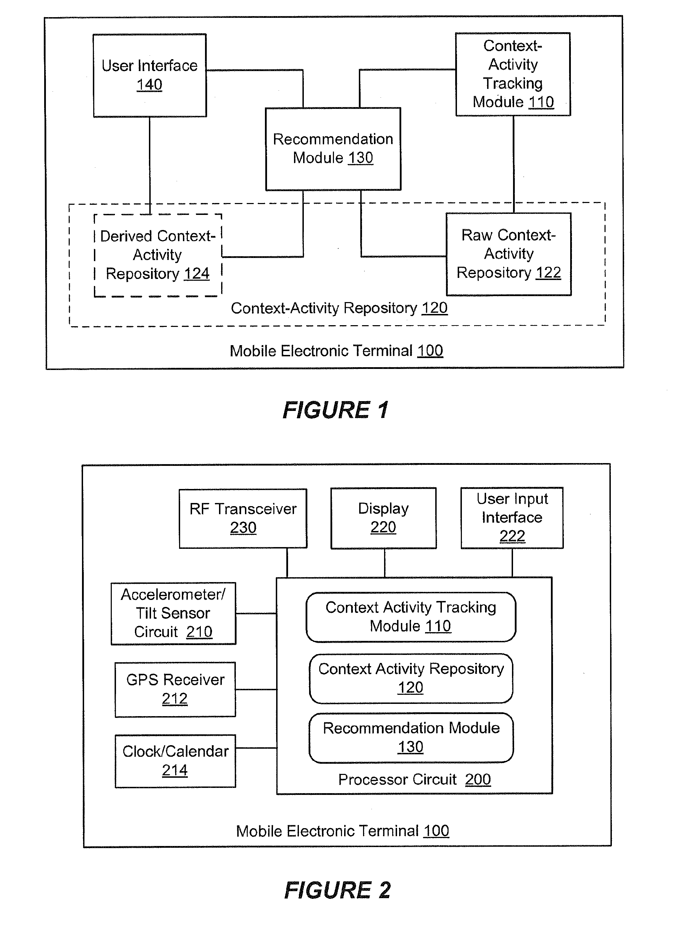

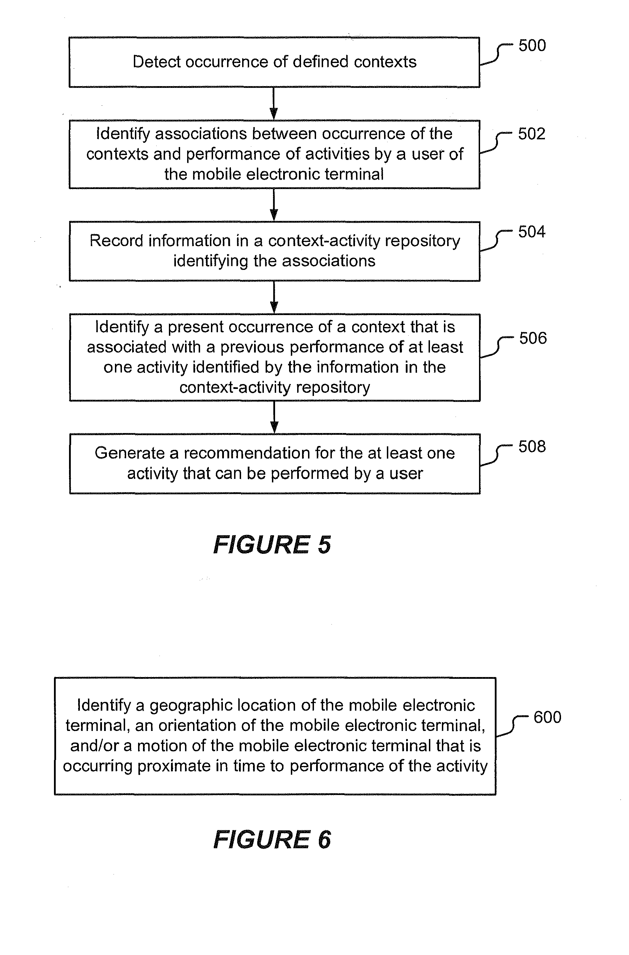

Figure 1 is a block diagram of a mobile electronic terminal 100 that is configured according to some embodiments. Figure 5 is a flowchart of operations and methods that may be performed by various elements of Figure 1. Referring to Figures 1 and 5, the terminal 100 includes a context activity tracking module 110, a recommendation module 130, a context-activity repository 120, and a user interface 140.

The context activity tracking module 110 detects (block 500) occurrence of defined contexts, and identifies (block 502) associations between occurrence of the contexts and performance of activities by a user of the terminal 100. Information is then recorded (block 504) in the context-activity repository 120 identifying the associations that are identified. The recommendation module 130 identifies (block 506) a present occurrence of a context that is associated with a previous performance of an activity which is identified by the information in the context-activity repository 120. The recommendation module 130 generates (block 508) a recommendation for the at least one activity that can be performed by the user. The recommended activity(ies) may be displayed on a display device of the user interface 140, output as an audible message through a speaker of the user interface 140, communicated as a data message for display or audible output on a remote device, and/or otherwise communicated to the user.

In this manner, the terminal 100 can dynamically and automatically (e.g., without human intervention) recommend a list of activities that a user may want to perform using the terminal 100, another terminal, and/or separate from any terminal. The terminal 100 may, for example, display a list of recommended application programs that a user can selected among to cause execution by the terminal 100 or by another terminal, and may sense a user selection (e.g., one-click shortcut) of one of the recommended application programs to trigger its execution.

Because the activity recommendations are determined responsive to the presently detected context, they can be highly personalized to a particular user's habits and can dynamically change to reflect changes that occur over time. This context-aware recommendation of activities can remind a user of routine activities that have not been purposefully scheduled by the user for generation of the reminder, may assist a user with exploring new activities that can be performed, and/or may facilitate the efficiency and/or enjoyment that a user perceives as being provided by the terminal 100.

The context activity repository 120 of the terminal 120 may contain a raw context activity repository 122 that stores a sequential log of activities that have been performed and the associated contexts that have been sensed. The repository 120 may further contain a derived context-activity repository 124 that contains records that are derived by combining information from the raw context activity repository 122. Records of the derived context-activity repository 124 may identify, for example, how frequently activities are performed, what contexts have been sensed proximate in time to performance of the activities (e.g., contexts associated with a same activity are relationally grouped for reference) and may further indicate how often different contexts have been present when each of the activities was performed. Further examples of these and other methods of combining information from the raw context activity repository 122 to form the derived context activity repository 124 are explained below.

Figure 2 is a further block diagram of the terminal 100 of the Figure 1 configured according to some further embodiments. The terminal 100 includes a processor circuit 200 that can execute functional modules, which have been illustrated as including the context activity tracking module 110, the context activity repository 120, and the recommendation module 130. The terminal 100 may further include other elements, such as a RF transceiver 230, a display 220, a user input interface 222, an acceleration/tilt sensor circuit 210, a GPS receiver 212, and/or a clock/calendar circuit 214.

The processor 200 may include one or more data processing circuits, such as a general purpose and/or special purpose processor (e.g., microprocessor and/or digital signal processor). The processor 200 is configured to execute computer program instructions from the functional modules 110 and 130 in memory device(s) (which may be part of the processor circuit 200 or separate therefrom), described below as a computer readable medium, to perform at least some of the operations and methods described herein as being performed by a terminal in accordance with one or more embodiments of the present invention.

The acceleration/tilt sensor circuit 210 is configured to generate a signal that indicates when the terminal 100 is being moved by a user and/or that indicates an angular orientation of the terminal 100. The sensor circuit 210 may, for example, include an accelerometer (e.g., a single or multi-axis accelerometer) that outputs a signal indicating an acceleration level(s) of the terminal 100 and/or may include a tilt sensor that generates a signal which indicates a tilt orientation of the terminal 100. The GPS receiver 212 outputs signals that can be used by the processor circuit 200 to determine a geographic location of the terminal 100. The clock/calendar circuit 214 can output information identifying a time of day, a day of week, and/or other time/date information.

The context-activity tracking module 110 can respond to performance of an activity by the user by generating a record in the context-activity repository 120 that identifies the activity and at least one detected context that is occurring proximate in time to performance of the activity.

Figure 6 is a flowchart of operations and methods that may be performed by various components of the terminal 100 shown in Figure 2. In one embodiment, the context-activity tracking module 110 responds to a defined activity being performed by identifying (block 600) a geographic location of the mobile electronic terminal (e.g., using information from the GPS receiver 212), and storing the identified geographic location as context information associated with information characterizing the activity as a record in the context-activity repository 120. In another embodiment, the context-activity tracking module 110 responds to a defined activity being performed by identifying (block 600) an orientation of the mobile electronic terminal (e.g., using a tilt sensor 210), and storing the identified orientation as context information associated with information characterizing the activity as a record in the context-activity repository 120. In another embodiment, the context-activity tracking module 110 responds to a defined activity being performed by identifying (block 600) motion of the mobile electronic terminal (e.g., using an accelerometer sensor 210 and/or the GPS receiver 212) that is occurring proximate in time to performance of an activity, and storing the identified motion as context information associated with information characterizing the activity as a record in the context-activity repository 120.

In another embodiment, the context-activity tracking module 110 responds to a defined activity being performed by storing, as a record in the context-activity repository 120, context information that identifies a time of day and/or a day of the week that is occurring proximate in time to performance of the activity.

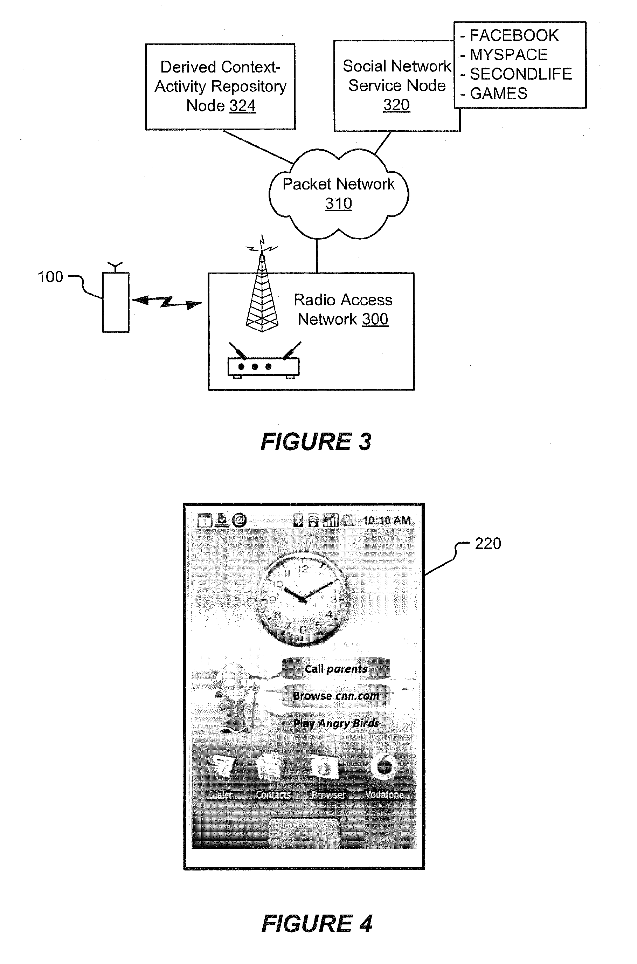

In some embodiments, the terminal 100 is configured to access information via a wireless interface through the RF transceiver that identifies activities that the user and/or other users have performed and the associated contexts that have occurred when those activities were performed. Figure 3 illustrates a block diagram of some components of a communication system that allows the terminal 100 to access remotely located context-activity information through a network. The terminal 100 can communicate through a radio access network 300 (e.g., 3GPP compliant or other wireless communication interface) and wired packet network 310 (e.g., public network and/or private network) to a social network service node 320 (e.g., FACEBOOK, MYSPACE, SECONDLIFE, other social interaction service providers, and/or on-line games) and/or a derived context-activity repository node 324. The social network service node 320 may corresponds to a FACEBOOK, MYSPACE, SECONDLIFE, on-line gaming, and/or other social interaction service provider. The terminal 100 can be configured to obtain information from the social network service node 320 that identifies at least part of a social network profile for the user and/or at least part of a social network profile for other users, and to use that information to determine what activities the user and/or other users have performed in different defined contexts.

The derived context-activity repository node 124 that is shown in Figure 1 as being located in the terminal 100 may additionally or alternatively be located in the derived context activity repository node 324 of Figure 3. The derived context activity repository node 324 can functional as a centralized repository of information for a plurality of the terminals 100, and may contain records that are derived by combining records from the plurality of the terminals 100. Records of the derived context-activity repository node 324 may identify, for example, how frequently activities are performed by users of a plurality of terminals 100, what contexts have been sensed proximate in time to performance of those activities (where contexts associated with a same activity are relationally grouped for reference) and may further indicate how often different contexts have been present when each of the activities was performed. Further examples of these and other methods of combining information to form the derived context activity repository node 324 are explained below. The terminal 100 can be configured to obtain information from the context activity repository node 324 to determine what activities the user and/or other users have performed in different defined contexts.

Further to the description above of Figures 1 and 2, the recommendation module 130 is configured to identify a present occurrence of a context that is associated with a prior performance of at least one activity identified by the information in the context-activity repository, and to generate a recommendation for the at least one activity that can be performed by the user. The recommendation module 130 can display, on the display device 220, the recommended at least one activity to a user. The user may select an activity that is to be performed separate from the terminal 100 (e.g., recommendation to visit a person who is located nearby), or may select an activity which triggers execution of one or more applications by the terminal 100 (e.g., starting a recommended game application).

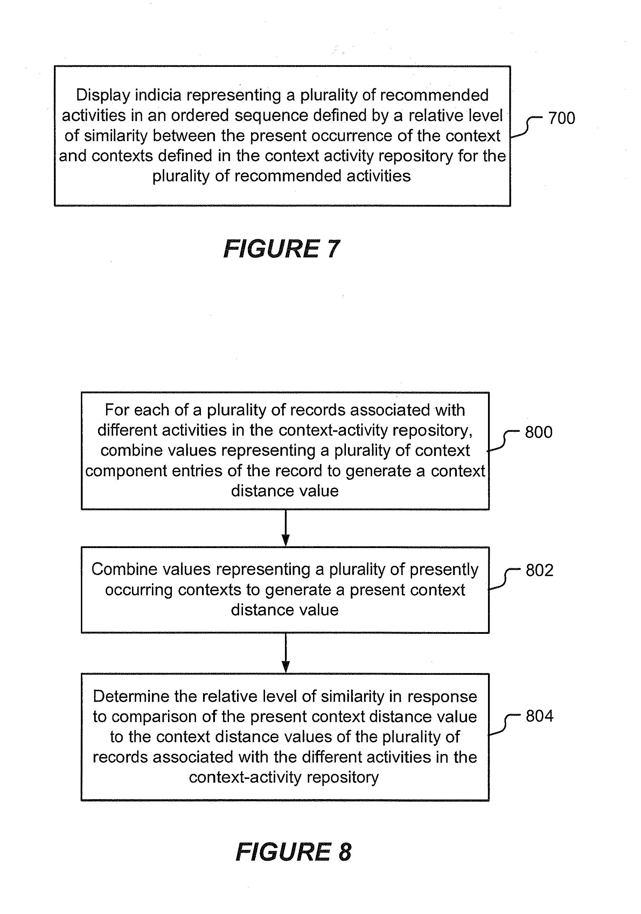

Figure 7 is flowchart of operations and methods that may be performed by the terminal 100 to display recommended activities to a user. The recommendation module 130 can display (block 700) indicia representing a plurality of recommended activities in an ordered sequence that is defined by a relative level of similarity between the present occurrence of a sensed context (e.g., geographic location of the terminal 100, orientation of the terminal 100, motion of the terminal 100, time of day, and/or day of week, etc.) and contexts that have been defined in a context activity repository (context activity repository 120, derived context activity repository 324, and/or social network service node 320) for the plurality of recommended activities.

In a further embodiment, for each of a plurality of records associated with different activities in the context-activity repository 120, the terminal 100 combines values representing a plurality of context component entries of the record to generate a context value. The terminal 100 combines values representing a plurality of presently occurring contexts to generate a present context value, and determines the relative level of similarity in response to comparison of the present context value to the context values of the plurality of records associated with the different activities in the context-activity repository 120 The relative levels of similarity can be determined by calculating a distance between the present context value and selected ones of the context values of the plurality of records associated with the different activities in the context-activity repository 120.

In a further embodiment, the terminal 100 determines the ordered sequence, for presentation of the recommended activities, in response to a relative level of similarity between the present occurrence of the context and context information obtained from the social network service node 320 that is indicative of activities that other users have performed in similarly occurring contexts.

Various further operations and methods will now be described for combining information from the context-activity repository 120, the derived context-activity repository node 324, and/or the social network service node 320 to generate recommendations for activities may a user may want to perform. For simplicity of description, the following examples refer to operating using information from the context-activity repository 120, however one or more of these embodiments may additionally or alternatively use information from the derived context-activity repository node 124 and/or the social network service node 320.

Figure 8 is flowchart of operations and methods that may be performed by the terminal 100 to generate recommendations. For each of a plurality of records associated with different activities in the context-activity repository 120, the recommendation module 130 can combine (block 800) values representing a plurality of context component entries of the record to generate a context value which can be stored in the context-activity repository 120. Subsequently, the recommendation module 130 can combine (block 802) values representing a plurality of presently occurring contexts to generate a present context value, and can determine (block 804) the relative level of similarity in response to comparison of the present context value to the context values of the plurality of records associated with the different activities in the context-activity repository.

The recommendation module 130 may apply defined weighting factors when combining values representing a plurality of context component entries for one of the records, where the weighting factor applied to a particular one of the values represents an importance of the particular value to the user. In one embodiment, the recommendation module 130 may generate the context distance value based on calculation of a Euclidean distance between values representing a plurality of context component entries for one of the records.

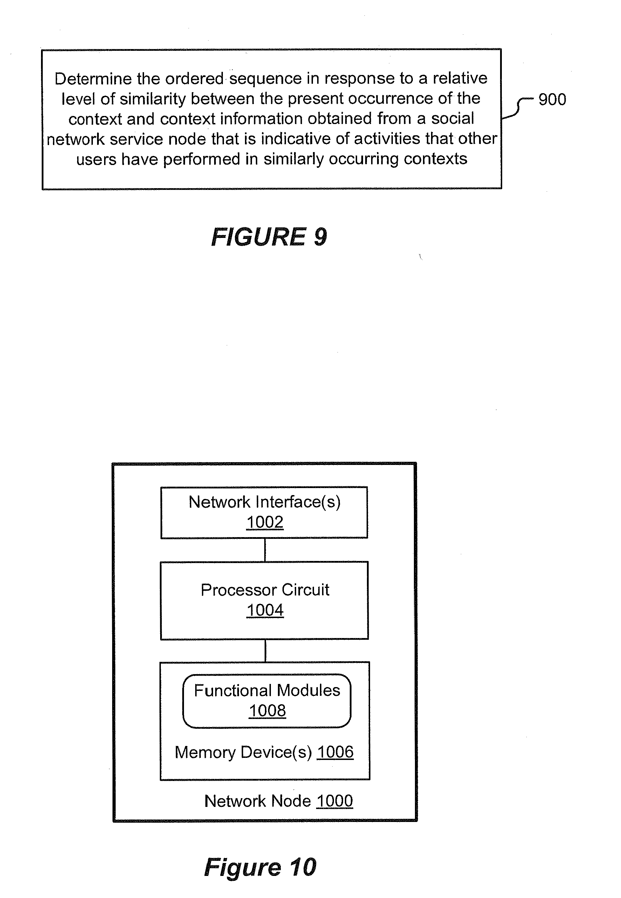

Figure 9 is flowchart of operations and methods that may be performed by the terminal 100 to generate recommendations based on information obtained from the social network service node 320. The recommendation module 130 may determine (block 900) the ordered sequence in response to a relative level of similarity between the present occurrence of the context and context information obtained from the social network service node 320 that is indicative of activities that other users have performed in similarly occurring contexts. In one embodiment, the recommendation module 130 obtains at least part of a social network profile for the user and at least part of a social network profile of other users from the social network service node, and determines the ordered sequence in further response to comparison of the obtained social network profiles for the user to the other users.

In a further embodiment, the context-activity tracking module 110 is further configured to control which of the defined contexts are tracked in response to commands received from the user via the user interface, and to respond to a command from a user to a remove a previously tracked context from future tracking by removing information for the previously tracked context from the context-activity repository.

### User Interface

The user interface 140 can function as an interaction point between the user and activation of recommendation of activities. The user interface 140 may include a widget on a home screen the terminal 100. The user interface 140 may be a native app that needs to be explicitly launched by the user. The user interface 140 may be a web app or an iFrame component that is presented through a web browser, and/or a plugin that can be installed on a web browser.

The user interface 140 detects at what point activity recommendation is needed. Detecting can be triggered in various ways, for example, when the user switches to the home screen of the terminal 100, when the user tilts the terminal 100 to a particular orientation, or when the user put the terminal 100 into silent mode, etc. Activity recommendation could also be triggered by the startup of a browser or the native/web app.

When triggered, the user interface 140 communicates with the recommendation module 130 to retrieve the current context. The recommendation module 130 can retrieve raw context data from the raw context activity repository 122, and returns the formulated representation of a derived context. The derived context can be sent to the recommendation module 130 for a context search, and a recommendation for one or more activities can be presented to the user. The user interface 140 may allow the user to define various options for generating personalized recommendations.

### Illustrative Example Embodiments

These and other embodiments are further described below by way of various illustrative examples. These examples are not limiting on the scope of other embodiments, but are provided to facilitate an understanding of how some embodiments may be implemented.

Certain defined user activities, or all user activities that are detectable by the terminal 100, may be recorded in the context activity repository 120, where the activity and associated detected context can be stored as logically associated records. These records can then be used to generate recommendations for activities that a user may want to perform when a present context is detected that corresponds to one or more activities in the repository 120. The recommended activities may be presented (e.g., displayed) to the user in a descending order of similarity, and may come with user selectable links that will, for example, trigger execution of applications by the terminal 100. Some of the recommended activities can correspond to what the user did before in similar contexts, whereas some other recommended activities can correspond to what the user's social contacts or other similar users did before in similar contexts and the user might be interested in exploring.

In at least some of the following embodiments, the context associated with performance of an activity is modeled as a point in a multi-dimensional space, in which each dimension captures an aspect of context (e.g., information from the user's social profile). Recommendations are generated by searching the user's current context coordinate in the context space and finding past activities (e.g., activities defined by information in the context activity repository 120 and/or node 324) with the nearest context coordinates. Improved recommendations are made through fusing user activities and contexts together (e.g., where a user's activities are taken as a part of the user's context) while the changes in the user's context are utilized to infer what activities the user performed separately from the terminal 100.

### Collect Explicit Activities

In the present example, explicit user activities are those activities that a user conducts using the terminal 100 and can be detected by the context activity tracking module of the terminal 100. Explicit user activities and the context they take place in can be continuously sensed and recorded as they occur. An activity on the terminal 100 can be detected as being performed in response to determining that an application (e.g., phone call, SMS, media player, a defined application, etc.) is brought to the foreground to receive input from a user and/or to provide output to a user, and/or in response to the application being determined to have actively run for at least a defined period of time.

A user activity is represented using the type of the activity and metadata that further describes the activity. Examples of explicit activities and their corresponding metadata can include the following:
1) Making a phone call (record name/number of the callee, relationship with the callee, etc.);
2) Sending short message service (SM) message (record name/number/address of the receiver, relationship with the receiver, etc.);
3) Listening to music (record name of the album/song);
4) Watching video (record title or addressable identifier for the video);
5) Using an application (record name of the application); and/or
6) Browsing the Web (record URL of one or more sites visited)

### Collect Raw Context Data

At the time a user activity is recorded, the context in which it takes place is captured and logically associated with it. Raw context data is collected by the context activity tracking module 110 from one or more of the sensors 210 and/or 212 and/or the clock/calendar 214 for storage in the raw context activity repository 122. An example record may include the following information: [activity] "Make a phone call", [relationship] "parents", [phone number] "1256953732", [geographic location] "37.555,-122.058", [acceleration/tilt, time, other information] (0, 0, 0)"

### Derive Context from Raw Context Data

To make sense of the raw context data and understand the situation in which an activity happens, the recommendation module 130 can be configured to derive higher-level context from the information in the raw context activity repository 122. Such higher-level context can be directed to determining information such as:
1) On what time of a day, what day of a week, and what type of day does the activity happen;
2) At what type of location does the activity happen;
3) Is the user moving when the activity happens;
4) What else is the user doing when the activity happens; and/or
5) Characteristics of the user (what is the user's profile like).

To be able to answer those questions, additional information may be needed from other sources. To determine any significance of the present day for any relevance to selection of activities for recommendation, beyond which day of a week it is, a web service (e.g., via the radio access network 300, packet network 310, and the repository node 324, the service node 320 and/or another network node) for holiday lookup may be consulted. Moreover, a user's calendar may be queried to determine whether the user is on vacation or has another status that may be relevant to selection of activities for recommendation. To determine any significance of a location to recommendation of activities, the user's geographic coordinate may be provided to a location lookup service (e.g., Google Place API, Foursquare API, etc.) to obtain further information associated with the location. In addition, customized locations for a user, such as home and office locations, may be determined using a web service such as Google Latitude API and/or the user's geographic location may be tracked over a sufficient length of time to identify locations that are potentially significant to the user. A user's mobility may be determined using accelerometer data and/or from changes observed in the geographic location. Possible significance of an activity that is being performed by a user may be determined by querying a calendar and searching for predefined keywords (e.g., to determine that the activity corresponds to a dentist appointment or visiting a business location). A profile of user activities and associated contexts may be further developed by aggregating information retrieved from the user's terminal and networked information repositories, such as the derived context activity repository 324 and/or the social network service node 320 of Figure 3.

### Formulate Context

The context of a user activity can be modeled as a coordinate ("context coordinate") in a multi-dimensional space ("context space"). Each dimension of this "context space" captures at certain abstraction level an aspect of a context associated with performance of an activity. Multiple dimensions may capture the same aspect of a context, but from different context perspectives (e.g., location, motion, time, etc.) or at different granularities. For example, there can be multiple dimensions related to time: time of the day, day of a week, time of a week, etc. Each dimension has a value range, defining the possible values of the dimension. For instance, the "day of a week" dimension can have the following values: 1, 2, 3, 4, 5, 6, 7; the "time of the day" dimension can have the following values: morning, afternoon, evening. A special value of "null" can be used to indicate that a dimension is irrelevant to the corresponding activity. The difference between two values on a dimension can be numerically calculated. The difference between "null" and any value can always be 0.

A special dimension of the context space can capture a user's social profile. A value on this dimension is itself a coordinate, capturing e.g., the user's age, gender, region, ethnics, marital status, and position in a social graph.

The distance between two coordinates in the context space indicates the similarity between the corresponding contexts. The shorter the distance is, the more similar the contexts. "Context distance" can be calculated as the geometric distance (e.g., Euclidean distance) between the two coordinates. A weighting factor can be assigned to each dimension to indicate its significance to the user. For example, the social profile dimension can have the greatest weight. As a result, context coordinates from the same user are mostly closer than those from other users. Further, context coordinates from users with similar profiles or users who are social connected can be relatively close.

As a further illustrative example, five dimensions are defined to record various aspects of a context associated with performance of an activity, these dimensions include: day of a week (Monday, ..., Sunday), time of a day (morning, afternoon, evening), type of the day (work day, holiday), location (home, office, merchant, hospital, unknown location), mobility (static, walking, running, biking, driving/commuting, unknown mobility), event (meeting, doctor appointment, concert, party, unknown event). For simplicity, the difference of two values on these dimensions is defined to be binary, meaning that they are either different (binary value 1) or same (binary value 0). Moreover, we also define a "social profile" dimension that has the following attributes: (i) age (20's, 30's, ...), (ii) gender (male, female), and (iii) position on social graph (in this example, a social networking site ID). The difference between two values on the first two attributes is also defined to be binary. In the case of "position on social graph", the difference is "self" (0), "connected" (0.5) or "not connected" (1) (alternatively this can be defined as the number of social hops between two users).

With the above, a set of formulated context-activity records from the same user can take the following non-limiting example form:
1) ((40, male, '111111'), Friday, evening, work day, home, static, unknown event):
   Make a phone call ("parents");
2) ((40, male, '111111'), Monday, morning, work day, unknown location, commuting, unknown event): Listen to music ("The Fame");
3) ((40, male, '111111'), Friday, afternoon, holiday, hospital, static, doctor appointment): Use app ("Angry Birds"); and
4) ((40, male, '111111'), Wednesday, morning, work day, office, static, meeting):
   Browse web (http://www.cnn.com).

Moreover, each context-activity record can be tagged with a changing parameter "freshness", which indicates how recently the associated activity was performed. The freshness parameter may always start at a maximum value (e.g., 1) and then decrease over time (e.g., by 20% every 30 days). As the freshness value of a record decreases, the associated record is given less significance for use in generating activity recommendations by the recommendation module 130. When the freshness value of a record goes below a predefined threshold (e.g., 0.01), the record can be removed and is not further considered when generating activity recommendations.

### Derive Context from Activities

An activity and the context that occurs proximately in time to its performance can therefore be used as interrelated concepts. On one hand, an activity can be considered as a part of context and, on the other hand, a present context is used to recommend an activity.

To elaborate, first, a user's most recent activity is taken as a part of the user's context. This is because what a user likely is about to do might be dependent on what the user just did. For example, a user oftentimes browses the web site "http://www.lyrics.com" after the user starts listening to the music album "The Fame". To capture that association, a dimension can be defined in the context space. The "activity" dimension takes the preceding activity as its value if it happened within a threshold time earlier (e.g., 10 minutes) than the activity. If there was no activity within that time frame, the "activity" dimension can be set to null, meaning that it does not relate to the subsequent performance of the activity.

Further to the above non-limiting example, the set of formulated context-activity records from the same user can take the following non-limiting example form:
1) ((40, male, '111111'), Friday, evening, work day, home, static, unknown event, use App ("Angry Birds")): Make a phone call ("parents");
2) ((40, male, '111111'), Monday, morning, work day, unknown location, commuting, unknown event, use App ("Weather Channel")): Listen to music ("The Fame");
3) ((40, male, '111111'), Friday, afternoon, holiday, hospital, static, doctor appointment, use app ("Google Maps")): Use app ("Angry Birds"); and
4) ((40, male, `111111'), Wednesday, morning, work day, office, static, meeting, null): Browse web (http://www.cnn.com).

### Derive Implicit Activities from Context

Implicit user activities can be defined from those activities that users perform separately from the terminal 100 and can be determined from the associated changes in their contexts. For example, when there is a significant change in a user's location between two consecutive explicit activities, it can be inferred that the user has gone from one location to another. Similarly, if there is a change in a user's mobility, say from "static" to "running", and the latter stays the same for several subsequent activities, it can be inferred that the user went running. An implicit activity is generated in these cases and is inserted into the context-activities records.

With the above, a set of formulated context-activity records from the same user can take the following non-limiting example form:
1) ((40, male, '111111'), Friday, afternoon, holiday, hospital, static, doctor appointment, use app ("Google Maps")): Use app ("Angry Birds"); and
2) ((40, male, '111111'), Friday, evening, holiday, home, static, unknown event, use app ("Angry Birds")): Make a phone call ("parents"),
   and result in the records taking the form:
   1) ((40, male, '111111'), Friday, afternoon, holiday, hospital, static, doctor appointment, use app ("Google Maps")): Use app ("Angry Birds");
   2) ((40, male, '111111'), Friday, afternoon, holiday, unknown location, static, doctor appointment, use app ("Angry Birds")): Go to location ("home"); and
   3) ((40, male, '111111'), Friday, evening, holiday, home, static, unknown event, go to location ("home")): Make a phone call ("parents").

### Aggregating Context-Activity Records

While a derived context-activity record is generated, it is aggregated with previous records with the same activity from the same user.

A first step of the aggregation can be to group duplicates. For example, if the "Make a phone call ("parents")" activity has happened 5 times with equal context coordinates, they can be grouped together. The freshness of the resulting record can be calculated as the sum of those records' freshness values, so that the set of formulated context-activity records can take the following non-limiting example form:
*((40, male, '111111), Friday, evening, work day, home, static, unknown event, Go to loeation ("home ")): Make a phone call ("parents") - 3.8*

Accordingly, in one embodiment, the context-activity tracking module 110 can be configured to combine a plurality of records associated with a same activity in the context-activity repository 120 to generate an aggregated record. The recommendation module 130 can be configured to generate the recommendation for the at least one activity in response to comparison of the present occurrence of the context to the aggregated record.

The record in the context-activity repository 120 generated by the context-activity tracking module 110 includes a freshness value that indicates recency of a last performance of the activity associated with the record. The context-activity tracking module 110 can combine freshness values of the plurality of records associated with the same activity to generate a freshness value for the aggregated record that indicates a more recent performance of the associated activity than indicated by individual ones of the freshness values before being combined. The recommendation module 130 generates an ordered sequence of a plurality of recommended activities in response to at least the freshness values of the records associated with the recommended activities.

A second step of the aggregation can be to nullify irrelevant context dimensions for a frequent activity of a user. If existing records of an activity have fully covered the value range of a dimension, it implies that this dimension has no impact on this particular activity; it is thus nullified. In the present example, a "Make a phone call ("parents")" activity is found to have taken place at all possible location types. The records can take the following non-limiting example form:
1) ((40, male, '111111'), Friday, evening, work day, home, static, unknown event, go to location ("home")): Make a phone call ("parents") - 3.8
2) ((40, male, '111111'), Friday, evening, work day, office, static, unknown event, null): Make a phone call ("parents") - 0.8
3) ((40, male, '111111'), Friday, evening, work day, merchant, static, unknown event, null): Make a phone call ("parents") - 0.64
4) ((40, male, '111111'), Friday, evening, work day, hospital, static, unknown event, null): Make a phone call ("parents") - 0.8
5) ((40, male, '111111'), Friday, evening, work day, unknown location, static, unknown event, null): Make a phone call ("parents") - 0.8
6) ((40, male, '111111'), Friday, evening, work day, unknown location, commuting, unknown event, listen to music ("The Fame")): Make a phone call ("parents") - 1

In this case, the "location" dimension is nullified. As the "activity" dimension has already been nullified, it is also updated in other records. Some of the records are then merged because they now have the same context coordinate. As a result, the records can be updated to the following.
1) ((40, male, '111111'), Friday, evening, work day, null, static, unknown event, null): Make a phone call ("parents") - 6.84
2) ((40, male, '111111'), Friday, evening, work day, null, commuting, unknown event, null): Make a phone call ("parents") -1

### Context Search

At the time when recommendations are needed (e.g., when a user unlocks a phone, or browses to the home screen of the phone), the user's current context is captured and formulated as a coordinate. In the present example, it is assumed that it is presently Friday night and the user just returned home and is not engaged in a defined activity. In this case, the current context coordinate can take the following non-limiting example form:
((40, male, '111111'), Friday, evening, work day, home, static, unknown event, go to location ("home"))

Accordingly, the method can respond to past activities (from all users) that took place in similar contexts as the candidates to be recommended. To find such activities, the context space is searched with the user's current context coordinate. This method may utilize a similar process to a map search in a 2-dimensional space, where the longitude/latitude of a geographic location is given, and the points of interest that are closest to that location are returned. The method may be solved using a Nearest Neighbor Search algorithm.

In the present example, the pool of context-activity records can take the following non-limiting example form, assuming that (40, male, '222222') is a second user who is a friend of the user in question, and that (20, male, '333333') is a third user who has no social connection with the user in question.
1) ((40, male, '111111'), Friday, evening, work day, null, static, unknown event, null): Make a phone call ("parents") - 6.84
2) ((40, male, '111111'), Friday, evening, work day, null, commuting, unknown event, null): Make a phone call ("parents") - 1
3) ((40, male, '111111'), Monday, morning, work day, unknown location, commuting, unknown event, use App ("Weather Channel")): Listen to music ("The Fame") - 5
4) ((40, male, '222222'), null, evening, work day, home, static, unknown event, Browse web (http://www.bbc.com)): Use app ("Angry Birds") - 4.8
5) ((20, male, '333333'), Wednesday, morning, holiday, hospital, static, doctor appointment, null): Use app ("Plants Vs Zombies") - 0.8
6) ((40, male, '111111'), Wednesday, null, work day, office, static, meeting, null):
   Browse web (http://www.cnn.com) - 3.2

The distances between the current context coordinate and those coordinates can be calculated as follows. For the present example, it is assumed that the weighting factors on the dimensions are all 1/10, except for the "social profile" dimension which has 3/10. It is further assumed that the weighting factors on the attributes o the "social profile" dimension are all 1/4 except the "position on social graph" attribute which has 1/2. With the above, a set of formulated context-activity records from the same user can take the following non-limiting example form:
- ((40, male, '111111'), Friday, evening, work day, null, static, unknown event, null):
   Make a phone call ("parents") - 6.84
      oDistance = (3110 * 0² + 1110 * 0² + 1/10 * 0² + 1/10 * 0² + 1/10 * 0² + 1/10 * 0² + 1/10 * 0²+ 1/10 * 0²)^{1/2}=0
   • ((40, male, '111111'), Friday, evening, work day, null, commuting, unknown event, null): Make a phone call ("parents") - 1
      oDistance = (3/10 * 0² + 1/10 * 0² + 1/10 * 0² + 1/10 * 0² + 1/10 * 1² + 1/10 * 1² + 1/10 * 0² + 1/10 * 0²)^{1/2}= 0.447
   • ((40, male, '111111'), Monday, morning, work day, unknown location, commuting, unknown event, use App ("Weather Channel")): Listen to music ("The Fame") - 5
      oDistance = (3/10 * 0² + 1/10 * 1² + 1/10 * 1² + 1/10 * 0² + 1/10 * 1² + 1/10 * 1² + 1/10 * 0²+ 1/10 * 1²)^{1/2}=0.707
   • ((40, male, '222222'), null, evening, work day, home, static, unknown event, Browse web (http://www.bbc.com)): Use app ("Angry Birds") - 4.8
      o Distance = (3/10 * (1/4 * 0² + 1/4 * 0² + 1/2 * (1/2)²) + 1/10 * 0² + 1/10 * 0² + 1/10 * 0² + 1/10 * 0² + 1/10 *0²+1/10 * 0² + 1/10 * 1²)^{1/2}= 0.612
   • ((20, male, '333333'), Wednesday, morning, holiday, hospital, static, doctor appointment, null): Use app ("Plants Vs Zombies") - 0.8
      o Distance = (3/10 * (1/4 * 1² + 1/4 * 0² + 1/2 *1²) + 1/10 * 1² + 1/10 * 1² + 1/10 * 0² + 1/10 * 1² + 1/10 * 0² + 1/10 * 1² + 1/10 * 0²)^{1/2}= 0.766
   • ((40, male, '111111'), Wednesday, null, work day, office, static, meeting, null): Browse web (http://www.cnn.com) - 3.2
      oDistance = (3/10 * 0² + 1/10 * 1² + 1/10 * 0² + 1/10 * 0² + 1/10 * 1² + 1/10 * 0² + 1/10 * 1² + 1/10 * 0²)^{1/2}= 0.548

The top candidate activities from the search are sorted in ascending order of distance to the current context coordinate. Two activities whose distances differ by less than a threshold value (e.g., 0.05) are considered having equal distances. In this case, the one with higher freshness (i.e., indicating more recent occurrences) is placed at a higher position. This leads to the following recommended activities:
Make a phone call ("parents") - 6.84
Make a phone call ("parents") - 1
Browse web (http://www.cnn.com) - 3.2
Use app ("Angry Birds") - 4.8
Listen to music ("The Fame") - 5
Use app ("Plants Vs Zombies") - 0.8

Further, in the sorted list, the same activities can be combined to be at the highest position. This results in the following sorted list of recommended activities:
Make a phone call ("parents")
Browse web (http://www.cnn.com)
Use app ("Angry Birds")
Listen to music ("The Fame")

### Generating Recommendations

As explained above, the results from a context search may be activities that either the user or other users previously performed in similar contexts. Activities from the same user are more likely to show up because of their closer context coordinates. If no activities from the user were performed before in similar contexts, or if the user just started using the service, activities from social contacts of the user and/or activities from other users of the service can be retrieved and used to generate recommended activities for the user. In this case, some of the activities will have to be refined before being presented to the user as recommendations. This is because the objects of some activities might not be available or accessible to the user.

For example, a contact that another user frequently called in similar context might not be on this user's phonebook. In such a case, the additional metadata associated with the activity is used to map to an available object on the user's mobile device. For example, the relationship with the callee/receiver (parent, wife, husband, son, brother, best friend), if available, is used to locate a corresponding contact on the user's mobile device, the name of which will appear in the recommendation. For those activities with inaccessible objects that cannot be mapped to accessible objects, they are filtered out from the recommendations.

### Presenting Recommendations

Depending on the desired number of activities to be recommended (e.g., 3), the list of generated recommendations is truncated. When presented to the user, each recommended on-device activity can contain a user selectable link (e.g., trigger) for starting the activity. When selected, the user selectable link causes the corresponding process (e.g., browser) to be executed and passes the corresponding parameter (e.g., http://www.cnn.com) to the process. If the object of the recommended activity is not directly available on the device, user selection of the link can cause the user to be taken to online resources where the object of the recomnended activity can be streamed, downloaded or purchased (for example, an app store, an e-book store, or a online music store, etc.).

Figure 4 illustrates a display device of the mobile electronic terminal of Figure 1 that displays an example list of recommended activities to a user.

### Potential Advantages of One or More Embodiment of the Invention

Various embodiment of the present invention may facilitate the efficiency and/or enjoyment that a user perceives as being provided by the terminal by intelligently predicting, and recommending/reminding activities that a user potentially will do based on the context a user is in, and providing shortcuts for the user to quickly start the activities. Some embodiments may recommend not only activities that a user has done before, but also activities the user might be interested in exploring. Some embodiments can make activity recommendations that are to be performed within the terminal, by another terminal, and/or separate from any terminal.

### Example Network Node and User Equipment Node Configurations

Figure 10 is a block diagram of a network node 1000 configured according to some embodiments of the present invention, and elements of which may be included in the derived context activity repository node 324, the social network service node 320, the radio access network 300, and/or another network node of the system of Figure 3. The network node 1000 includes a network interface(s) 1002, a processor circuit 1004, and a memory device(s) 1006 containing functional modules 1008.

The processor 1004 may include one or more data processing circuits, such as a general purpose and/or special purpose processor (e.g., microprocessor and/or digital signal processor). The processor 1004 is configured to execute computer program instructions from the functional modules 1008 of the memory device(s) 1006, described below as a computer readable medium, to perform at least some of the operations and methods described herein as being performed by the derived context activity repository node 324, the social network service node 320, the radio access network 300 and/or another network node in accordance with one or more embodiments of the present invention.

In one embodiment, the network interface 1002 is configured to communicate through a network with a plurality of mobile electronic terminals. The memory device 1006 includes a context-activity repository. The processor 1004 is configured to receive information from the mobile electronic terminals that identifies associations between occurrence of defined contexts and activities performed by users of the mobile electronic terminals, to store the information in the context-activity repository, to respond to a query from a mobile electronic terminal that identifies a present occurrence of a context by determining an association to a previous performance of at least one activity identified by the information in the context-activity repository, and to communicate an identification of the previously performed at least one activity to the mobile electronic terminal.

In a further embodiment, the processor 1004 is further configured to use from the query from the mobile electronic terminal, information that identifies a geographic location of the mobile electronic terminal, an orientation of the mobile electronic terminal, a motion of the mobile electronic terminal, a time of day, and/or a day of the week, to identify the association to the previously performed at least one activity.

In a further embodiment, the processor 1004 is further configured to determine an association to a previous performance of a plurality of activities identified by the information in the context-activity repository, and to communicate the plurality of activities as an ordered sequence defined by a relative level of similarity between the present occurrence of the context and contexts defined in the context activity repository for the plurality of activities.

### Further Definitions

When a node is referred to as being "connected", "coupled", "responsive", or variants thereof to another node, it can be directly connected, coupled, or responsive to the other node or intervening nodes may be present. In contrast, when a node is referred to as being "directly connected", "directly coupled", "directly responsive", or variants thereof to another node, there are no intervening nodes present. Like numbers refer to like nodes throughout. Furthermore, "coupled", "connected", "responsive", or variants thereof as used herein may include wirelessly coupled, connected, or responsive. As used herein, the singular forms "a", "an" and "the" are intended to include the plural forms as well, unless the context clearly indicates otherwise. Well-known functions or constructions may not be described in detail for brevity and/or clarity. The term "and/or", abbreviated "/", includes any and all combinations of one or more of the associated listed items.

As used herein, the terms "comprise", "comprising", "comprises", "include", "including", "includes", "have", "has", "having", or variants thereof are open-ended, and include one or more stated features, integers, nodes, steps, components or functions but does not preclude the presence or addition of one or more other features, integers, nodes, steps, components, functions or groups thereof. Furthermore, as used herein, the common abbreviation "e.g.", which derives from the Latin phrase "exempli gratia," may be used to introduce or specify a general example or examples of a previously mentioned item, and is not intended to be limiting of such item. The common abbreviation "i.e.", which derives from the Latin phrase "id est," may be used to specify a particular item from a more general recitation.

Example embodiments are described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

These computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks.

A tangible, non-transitory computer-readable medium may include an electronic, magnetic, optical, electromagnetic, or semiconductor data storage system, apparatus, or device. More specific examples of the computer-readable medium would include the following: a portable computer diskette, a random access memory (RAM) circuit, a read-only memory (ROM) circuit, an erasable programmable read-only memory (EPROM or Flash memory) circuit, a portable compact disc read-only memory (CD-ROM), and a portable digital video disc read-only memory (DVD/BlueRay).

The computer program instructions may also be loaded onto a computer and/or other programmable data processing apparatus to cause a series of operational steps to be performed on the computer and/or other programmable apparatus to produce a computer-implemented process such that the instructions which execute on the computer or other programmable apparatus provide steps for implementing the functions/acts specified in the block diagrams and/or flowchart block or blocks. Accordingly, embodiments of the present invention may be embodied in hardware and/or in software (including firmware, resident software, micro-code, etc.) that runs on a processor such as a digital signal processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated. Moreover, although some of the diagrams include arrows on communication paths to show a primary direction of communication, it is to be understood that communication may occur in the opposite direction to the depicted arrows.

Many different embodiments have been disclosed herein, in connection with the above description and the drawings. It will be understood that it would be unduly repetitious and obfuscating to literally describe and illustrate every combination and subcombination of these embodiments. Accordingly, the present specification, including the drawings, shall be construed to constitute a complete written description of various example combinations and subcombinations of embodiments and of the manner and process of making and using them, and shall support claims to any such combination or subcombination.

Other network nodes, UEs, and/or methods according to embodiments of the invention will be or become apparent to one with skill in the art upon review of the present drawings and description. It is intended that all such additional network nodes, UEs, and/or methods be included within this description, be within the scope of the present invention, and be protected by the accompanying claims. Moreover, it is intended that all embodiments disclosed herein can be implemented separately or combined in any way and/or combination.

## Claims

1. A mobile electronic terminal comprising:
a context-activity tracking module configured to detect defined contexts, to identify associations between occurrence of the contexts and activities performed by a user of the mobile electronic terminal, and to record information in a context-activity repository identifying the associations;
a recommendation module configured to identify a present occurrence of a context that is associated with a previous performance of at least one activity identified by the information in the context-activity repository, and to generate a recommendation for the at least one activity that can be performed by the user; and
a user interface configured to communicate the recommendation for the at least one activity to the user, and to receive an activation response from the user.

2. The mobile electronic terminal of Claim 1, wherein:
the context-activity tracking module responds to performance of an activity by the user by generating a record in the context-activity repository that identifies the activity and at least one detected context that is occurring proximate in time to performance of the activity.

3. The mobile electronic terminal of Claim 2, wherein:
the record in the context-activity repository generated by the context-activity tracking module identifies the at least one detected context as a geographic location of the mobile electronic terminal, an orientation of the mobile electronic terminal, and/or a motion of the mobile electronic terminal that is occurring proximate in time to performance of an activity.

4. The mobile electronic terminal of Claim 2, wherein:
the record in the context-activity repository generated by the context-activity tracking module identifies the at least one detected context as a time of day and/or a day of the week that is occurring proximate in time to performance of an activity.

5. The mobile electronic terminal of Claim 2, wherein:
the context-activity tracking module combines a plurality of records associated with a same activity in the context-activity repository to generate an aggregated record; and
the recommendation module generates the recommendation for the at least one activity in response to comparison of the present occurrence of the context to the aggregated record.

6. The mobile electronic terminal of Claim 5, wherein:
the record in the context-activity repository generated by the context-activity tracking module includes a freshness value that indicates recency of a last performance of the activity associated with the record;
the context-activity tracking module combines freshness values of the plurality of records associated with the same activity to generate a freshness value for the aggregated record that indicates a more recent performance of the associated activity than indicated by individual ones of the freshness values before being combined; and
the recommendation module generates an ordered sequence of a plurality of recommended activities in response to at least the freshness values of the records associated with the recommended activities.

7. The mobile electronic terminal of Claim 1, wherein:
the user interface comprises a display device; and
the recommendation module causes the display device to display indicia representing a plurality of recommended activities in an ordered sequence defined by a relative level of similarity between the present occurrence of the context and contexts defined in the context activity repository for the plurality of recommended activities.

8. The mobile electronic terminal of Claim 7, wherein the recommendation module is configured to:
for each of a plurality of records associated with different activities in the context-activity repository, combine values representing a plurality of context component entries of the record to generate a context value;
combine values representing a plurality of presently occurring contexts to generate a present context value; and
determine the relative level of similarity in response to comparison of the present context value to the context values of the plurality of records associated with the different activities in the context-activity repository.

9. The mobile electronic terminal of Claim 8, wherein:
the recommendation module applies defined weighting factors when combining values representing a plurality of context component entries for one of the records, wherein the weighting factor applied to a particular one of the values represents an importance of the particular value to the user.

10. The mobile electronic terminal of Claim 8, wherein:
the recommendation module generates the context distance value based on calculation of a Euclidean distance between values representing a plurality of context component entries for one of the records.

11. The mobile electronic terminal of Claim 7, further comprising:
a transceiver configured to communicate with network nodes via a radio access network,
wherein the recommendation module determines the ordered sequence in response to a relative level of similarity between the present context and context information obtained from at least one of the network nodes.

12. The mobile electronic terminal of Claim 7, wherein:
the recommendation module determines the ordered sequence in response to a relative level of similarity between the present occurrence of the context and context information obtained from a social network service node that is indicative of activities that other users have performed in similarly occurring contexts.

13. The mobile electronic terminal of Claim 12, wherein:
the recommendation module obtains at least part of a social network profile for the user and at least part of a social network profile of other users from the social network service node, and determines the ordered sequence in further response to comparison of the obtained social network profiles for the user to the other users.

14. The mobile electronic terminal of Claim 1, wherein:
the context-activity tracking module is further configured to control which of the defined contexts are tracked in response to commands received from the user via the user interface, and to respond to a command from a user to a remove a previously tracked context from future tracking by removing information for the previously tracked context from the context-activity repository.

15. A context activity repository node comprising:
a network interface configured to communicate through a network with a plurality of mobile electronic terminals;
a memory comprising a context-activity repository; and
a processor circuit configured to receive information from the mobile electronic terminals that identifies associations between occurrence of defined contexts and activities performed by users of the mobile electronic terminals, to store the information in the context-activity repository, to respond to a query from a mobile electronic terminal that identifies a present occurrence of a context by determining an association to a previous performance of at least one activity identified by the information in the context-activity repository, and to communicate an identification of the previously performed at least one activity to the mobile electronic terminal.

16. The context activity repository node of Claim 15, wherein:
the processor circuit is further configured to use from the query from the mobile electronic terminal, information that identifies a geographic location of the mobile electronic terminal, an orientation of the mobile electronic terminal, a motion of the mobile electronic terminal, a time of day, and/or a day of the week, to identify the association to the previously performed at least one activity.

17. The context activity repository node of Claim 15, wherein:
the processor circuit is further configured to determine an association to a previous performance of a plurality of activities identified by the information in the context-activity repository, and to communicate the plurality of activities as an ordered sequence defined by a relative level of similarity between the present occurrence of the context and contexts defined in the context activity repository for the plurality of activities.

18. A method by a mobile electronic terminal, the method comprising:
detecting occurrence of defined contexts;
identifying associations between occurrence of the contexts and performance of activities by a user of the mobile electronic terminal;
recording information in a context-activity repository identifying the associations;
identifying a present occurrence of a context that is associated with a previous performance of an activity identified by the information in the context-activity repository; and
generating a recommendation for the at least one activity that can be performed by the user.

19. The method of Claim 18, wherein detecting occurrence of defmed contexts comprises:
identifying a geographic location of the mobile electronic terminal, an orientation of the mobile electronic terminal, and/or a motion of the mobile electronic terminal that is occurring proximate in time to performance of an activity.

20. The method of Claim 18, wherein generating a recommendation comprises:
displaying indicia representing a plurality of recommended activities in an ordered sequence defined by a relative level of similarity between the present occurrence of the context and contexts defined in the context activity repository for the plurality of activities.

21. The method of Claim 20, further comprising:
for each of a plurality of records associated with different activities in the context-activity repository, combining values representing a plurality of context component entries of the record to generate a context value;
combining values representing a plurality of presently occurring contexts to generate a present context value; and
determining the relative level of similarity in response to comparison of the present context value to the context values of the plurality of records associated with the different activities in the context-activity repository.

22. The method of Claim 20, further comprising:
determining the ordered sequence in response to a relative level of similarity between the present occurrence of the context and context information obtained from a social network service node that is indicative of activities that other users have performed in similarly occurring contexts.
